# EUROPÄISCHE PATENTANMELDUNG

(11) **EP 2 366 486 A2**
(43) Veröffentlichungstag der Anmeldung: **21.09.2011**
(21) Anmeldenummer: 11158095.7
(22) Anmeldetag: 14.03.2011
(51) Int. Cl.: B23K 26/06, B23K 26/08

(54) **Vorrichtung zur Bearbeitung eines Werkstückes mittels ablenkbarem Laserstrahl**

(30) Priorität: 18.03.2010 DE 102010011988
(71) Anmelder: JENOPTIK Automatisierungstechnik GmbH, 07745 Jena (DE)
(72) Erfinder: Bergmann, Jean-Pierre, 99096 Erfurt (DE); Jancso, Alex, 07749 Jena (DE); Graul, Markus, 07407 Rudolstadt (DE)
(74) Vertreter: Schaller, Renate

(57) **Zusammenfassung**

Vorrichtung zur Werkstückbearbeitung mittels ablenkbarem Laserstrahl mit einer Laserstrahlquelle (1), einer ansteuerbaren Ablenkeinheit (5), die dazu ausgelegt ist, den auftreffenden Laserstrahl (2) in x-y-Richtung abzulenken, einer Fokussierungslinse (6) und einem ansteuerbaren, deformierbaren Spiegel (3) zur Fokuslagenkorrektur. Die Fokussierungslinse (6) ist im Strahlengang als letztes optisches Bauteil der Ablenkeinheit (5) nachgeordnet und mit dem einen Ablenkspiegel (5.1) der Ablenkeinheit (5) über ein starres Verbindungsglied (7) fest verbunden.

## Beschreibung

Aus dem Stand der Technik ist eine Vielzahl von Vorrichtungen zur Werkstückbearbeitung mittels Laser bekannt, mit denen ein Laserstrahl fokussiert über eine Werkstückoberfläche geführt wird. Ein Großteil dieser Vorrichtungen weist eine Ablenkeinheit auf, die in der Regel entweder aus einem Spiegel besteht, der um zwei zueinander senkrecht stehende Achsen verkippbar ist oder die zwei Spiegel aufweist, die jeweils um eine Achse kippbar sind, wobei die Achsen senkrecht aufeinander stehen. Mit einer solchen Ablenkeinheit kann ein auf diese auftreffendender, fokussierter Laserstrahl in x-y-Richtung so ausgelenkt werden, dass der Laserfokus auf einer, vom maximalen Ablenkwinkel abhängigen, großen Fläche bewegt wird.

Unabhängig davon, ob die für die Fokussierung des Laserstrahls erforderlichen Mittel vor oder nach der Ablenkeinheit im Strahlenverlauf angeordnet sind, oder die Ablenkeinheit selbst auch zur Fokussierung dient, indem anstelle von lediglich strahlumlenkenden Planspiegeln Konkavspiegel verwendet werden, beschreibt der Fokuspunkt eines fokussierten Laserstrahls bei einer Strahlauslenkung mittels einer derartigen Ablenkeinheit eine kugelschalenförmige Fläche. Das heißt der Fokus wandert mit einer beabsichtigten Auslenkung in x-y-Richtung in Abhängigkeit vom Auslenkwinkel in z-Richtung aus.

Zur Bearbeitung einer ebenen Werkstückoberfläche bzw. einer nicht kugelschalenförmigen Werkstückoberfläche ergibt sich die Notwendigkeit, die Fokuslage mit der Änderung des Auslenkwinkels so zu verschieben, dass in jedem Punkt des Auftreffens des Laserstrahles auf die Werkstückoberfläche der Fokuspunkt der Werkstückoberfläche liegt. Für bestimmte Anwendungen kann es auch von Interesse sein, dass der Fokuspunkt anstelle auf der Werkstückoberfläche in einem definierten Abstand zur Werkstückoberfläche geführt wird, wenn z. B. Effekte nicht auf der Werkstückoberfläche, sondern im Inneren des Werkstückes beabsichtigt sind. Wenn also nachfolgend von Mitteln oder Maßnahmen zur Fokuslagenkorrektur gesprochen wird, soll nicht nur eine Fokuslagenkorrektur auf eine Werkstückoberfläche verstanden werden, sondern eine Fokuslagenkorrektur in eine gewünschte Ebene, in einer definierten Lage zur Werkstückoberfläche.

Als gattungsgemäße Vorrichtungen werden solche Vorrichtungen zur Materialbearbeitung verstanden, die eine Laserstrahlquelle, bewegliche Mittel zur gesteuerten Strahlablenkung (Ablenkeinheit), Mittel zur Fokussierung, Mittel zur Änderung der Fokuslage in Abhängigkeit vom Ablenkwinkel (Mittel zur Fokuslagenkorrektur) und Mittel zur Strahlumlenkung aufweisen, um einen Laserstrahl von der Laserstrahlquelle zur Ablenkeinheit zu leiten. Dabei können die Mittel durch gleiche oder unterschiedliche Elemente bzw. Baugruppen gebildet werden.

Aus der EP 1 228 835 B1 ist eine Vorrichtung bekannt, die alle die genannten Mittel aufweist. Einer Laserstrahlquelle (hier Lasergenerator) sind in Strahlrichtung ein Mittel zur Strahlfokussierung (hier Fokussierungslinse), ein Mittel zur Strahlumlenkung (hier feststehender Spiegel) und eine Ablenkeinheit (hier mobiler Spiegel) nachgeordnet. Als Mittel zur Fokuslagenkorrektur dient die Fokussierungslinse, die entlang deren optischen Achse in Abhängigkeit vom Auslenkwinkel verschiebbar ist. Der mögliche Bewegungsbereich des Laserfokus im Raum ist durch den Auslenkwinkel des mobilen Spiegels begrenzt.

Eine in der WO 2007/079760 A1 beschriebene Vorrichtung soll die vorbenannte Vorrichtung insbesondere dahingehend verbessern, dass der Laserfokus einen größeren Bewegungsbereich im Raum erhält. Zu diesem Zweck ist die Vorrichtung so ausgeführt, dass der Laserstrahl, welcher gemäß der EP 1 228 835 B1 nur mittels der Ablenkeinheit um zwei Achsen ablenkbar ist, um zwei weitere Achsen drehbar ist. Damit ergibt sich zwangsläufig die Notwendigkeit, als Mittel zur Strahlumlenkung anstelle von einem Umlenkelement drei Umlenkelemente einzusetzen. Als Mittel zur Strahlfokussierung wird eines der Umlenkelemente, die sämtlich in Strahlrichtung vor der Ablenkeinheit angeordnet sind, als Ellipsoidspiegel ausgeführt, während ein zweites Umlenkelement als Mittel zur Fokuslagenkorrektur durch einen deformierbaren Spiegel gebildet wird.

Die DE 44 24 492 A1 offenbart ebenfalls eine gattungsgemäße Vorrichtung, bei der als Mittel zur Fokussierung eine in Strahlrichtung vor einer Ablenkeinheit angeordnete Fokussierungslinse vorhanden ist und im Strahlenverlauf vor der Fokussierungslinse ein ansteuerbarer deformierbarer Spiegel zur Fokuslagenkorrektur vorgesehen ist.

Der deformierbare Spiegel ist über eine elektronische Steuer- und Regeleinrichtung so ansteuerbar, dass die Krümmung der Spiegelfläche in Abhängigkeit von der Änderung des Auslenkwinkels der Ablenkeinheit und damit in Abhängigkeit von der Änderung des Abstandes eines durch den deformierbaren Spiegel unbeeinflussten Fokuspunktes zur Werkstückoberfläche in Richtung der Laserstrahlachse so eingestellt wird, dass der Fokuspunkt entlang der Laserstrahlachse auf die Werkstückoberfläche verschoben wird.

Alle vorbenannten Vorrichtungen haben den Nachteil, dass durch die frühzeitige Fokussierung des Laserstrahls im Strahlenverlauf der Laserstrahl auf die nachfolgenden optischen Bauteile mit einem vergleichsweise kleineren Strahlquerschnitt und einer höheren Strahldichte auftrifft und damit zu einer höheren thermischen Belastung dieser Bauteile führt. Die thermische Belastung wird nicht nur durch den absoluten Wärmeeintrag bestimmt, sondern insbesondere durch den Temperaturgradienten, wie er über die optisch wirksame Fläche entsteht. Durch den unterschiedlichen Grad der Erwärmung der Fläche kommt es zu unterschiedlich starken Materialausdehnungen und zur geometrischen Veränderung der optisch wirksamen Oberflächen, was zu einer sich über die betreffenden Bauteile aufsummierende, zusätzliche Fokuslagenverschiebung führt, die allerdings unkontrolliert erfolgt und damit durch eine Fokuslagenkorrektur, die abhängig vom Ablenkwinkel ist, nicht kompensiert werden kann.

Der Erfindung liegt die Aufgabe zu Grunde, eine gattungsgemäße Vorrichtung zu schaffen, bei der eine Fokuslagenverschiebung infolge von thermischer Belastung der optisch wirksamen Bauteile durch die Einwirkung des Laserstrahls verringert wird.

Diese Aufgabe wird mit einer Vorrichtung zur Werkstückbearbeitung mittels ablenkbarem Laserstrahl gelöst, die eine Laserstrahlquelle zum Aussenden eines

Laserstrahls, eine ansteuerbare Ablenkeinheit, die dazu ausgelegt ist den auftreffenden Laserstrahl in x-y-Richtung abzulenken, eine Fokussierungslinse und einen ansteuerbaren, deformierbaren Spiegel zur Fokuslagenkorrektur umfasst, wobei die Fokussierungslinse der Ablenkeinheit in Laserstrahlrichtung nachgeordnet ist und die Ablenkeinheit einen Ablenkspiegel aufweist, der über ein starres Verbindungsglied mit der Fokussierungslinse fest verbunden ist.

Durch die Anordnung der Fokussierungslinse hinter der Ablenkeinheit wird der Laserstrahl nahezu als paralleles Strahlenbündel bis hin zur Ablenkeinheit geleitet, wodurch im Vergleich zum Stand der Technik die Strahldichte des Laserstrahles beim Auftreffen auf optisch wirksame Bauteile, wie einen Umlenkspiegel oder den Ablenkspiegel, geringer ist. Um die Strahldichte noch weiter zu verringern, kann der Laserstrahlquelle auch ein Teleskop nachgeordnet sein, mit dem der Laserstrahl aufgeweitet wird. Als Laserstrahlquelle im Sinne der Erfindung soll hier ein Laser verstanden werden, gegebenenfalls mit einer vorgeordneten Strahlformungsoptik, die den vom Laser ausgesandten Laserstrahl zu einem parallelen Laserstrahl formt. Die Ablenkeinheit wird durch nur einen Spiegel gebildet, womit es möglich ist, diesen über eine feste Verbindung mit einer Fokussierungslinse zu verbinden, wodurch die Fokussierungslinse mit der Ablenkbewegung des Ablenkspiegels mitbewegt wird. Der Ablenkspiegel und die Fokussierungslinse sind in einer solchen Relativlage zueinander fixiert, dass ein vom Ablenkspiegel reflektierter Laserstrahl in Richtung der optischen Achse der Fokussierungslinse verläuft.

Um den Laserstrahl mit nur einem Ablenkspiegel in x-y-Richtung ablenken zu können, muss der Ablenkspiegel um zwei Achsen kippbar sein.

Vorteilhaft ist der Ablenkspiegel in einer kardanischen Aufhängung gelagert und steht mit zwei rotatorischen Antrieben in Verbindung, die getrennt ansteuerbar sind. Alternativ kann der Ablenkspiegel vorteilhaft über eine Dreipunktlagerung mit drei Linearantrieben in Verbindung stehen, die ebenfalls voneinander getrennt ansteuerbar sind.

Vorteilhaft ist zwischen dem deformierbaren Spiegel und dem Ablenkspiegel mindestens ein Planspiegel zur Strahlumlenkung vorhanden, der um eine Achse kippbar ist.

Vorteilhaft sind die Laserstrahlquelle und der deformierbare Spiegel zueinander starr angeordnet in einem Roboterfuß untergebracht, an dem ein Mehrgelenk-Roboterarm angebracht ist, in dem der Laserstrahl über die in den Gelenken angeordneten Planspiegel geführt ist und sich die Ablenkeinheit am freien Ende des Mehrgelenk-Roboterarmes befindet. Der deformierbare Spiegel und die hierzu erforderliche Ansteuerung sind im Vergleich zu einfachen Planspiegeln schwerer, weshalb seine Anordnung im Roboterfuß, wo sein Gewicht nicht mit dem Roboterarm bewegt werden muss, von Vorteil ist. Der vom deformierbaren Spiegel reflektierte Laserstrahl ist schwach konvergent und ändert den Konvergenzwinkel in Abhängigkeit von der Deformation seiner Oberfläche, die mit der Änderung des Ablenkwinkels geändert wird.

Die Konvergenz ist allerdings so gering, dass der Laserstrahl über den Strahlengang bis hin zur Ablenkeinheit nahezu parallel ist und der Strahlquerschnitt des Laserstrahls bei dessen Auftreffen auf die Planspiegel und den Ablenkspiegel nahezu gleich ist.

Die Anzahl der Gelenke und damit der Umlenkspiegel bestimmt die Freiheitsgrade, mit denen das freie Ende des Mehrgelenk-Roboterarmes im Raum bewegt werden kann. Der Fokus des Laserstrahles kann damit eine zusammengesetzte Bewegung, bestimmt durch die Bewegung des Mehrgelenk-Roboterarmes und der Ablenkeinheit ausführen.

Im Vergleich zu gattungsgleichen Vorrichtungen kann mit einer erfindungsgemäßen Vorrichtung ein Werkstück präziser bearbeitet werden, da der Laserfokus präzise zum Werkstück geführt werden kann.

Vorteilhaft ist eine Düse in Laserstrahlrichtung hinter der Fokussierungslinse und zu dieser fest angeordnet vorhanden. Über die Düse kann in Richtung des auf das Werkstück auftreffenden Laserstrahls ein Schutzgas zugeführt werden oder auch entstehende Abgase und Partikel abgesaugt werden. Vom Werkstück sich in Richtung der Fokussierungslinse bewegende Partikel werden weitestgehend von der Außenfläche der Düse abgehalten, wodurch eine Verschmutzung der Fokussierungslinse verhindert wird.

Anhand der Zeichnung wird die Vorrichtung im Folgenden beispielhaft näher erläutert.

Es zeigen:
- Fig. 1: eine Prinzipskizze einer Vorrichtung
- Fig. 2a: eine erste Ausführung einer Ablenkeinheit
- Fig. 2b: eine zweite Ausführung einer Ablenkeinheit

Gleich gattungsgemäßen Vorrichtungen dient eine erfindungsgemäße Vorrichtung der Bearbeitung eines Werkstückes mit einem Laserstrahl 2, wobei die Vorrichtung so ausgelegt ist, dass der Fokus des Laserstrahls 2 in einer definierten Ebene zum Werkstück, das kann die Werkstückoberfläche sein, geführt werden kann.

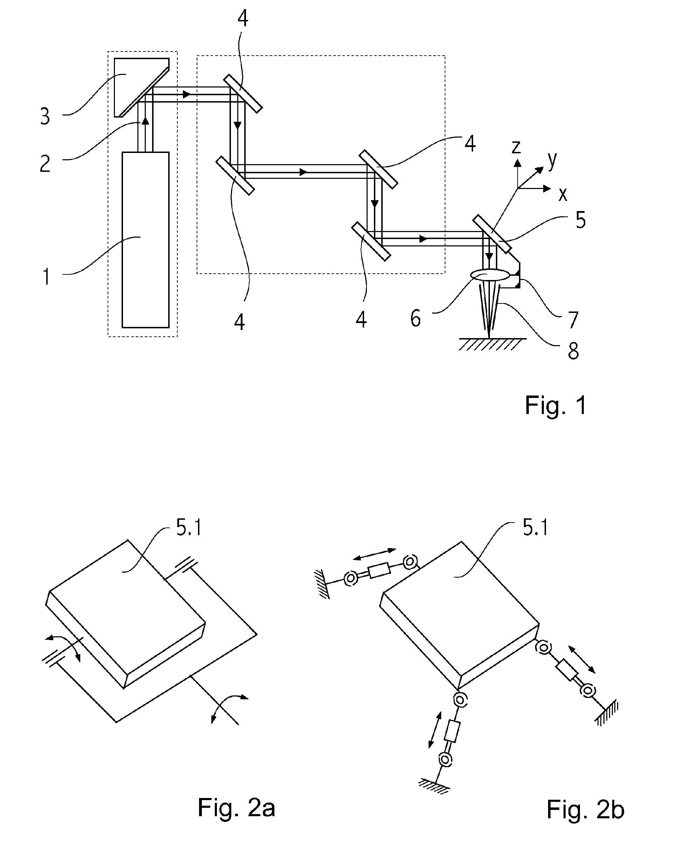

Eine erfindungsgemäße Vorrichtung gemäß Fig. 1 umfasst eine Laserstrahlquelle 1, die einen Laserstrahl 2 aussendet, und in Strahlungsrichtung nacheinander im Strahlengang angeordnet: einen ansteuerbaren, deformierbaren Spiegel 3, beispielsweise vier Umlenkspiegel 4, eine Ablenkeinheit 5 und eine Fokussierungslinse 6, die über ein starres Verbindungsglied 7 fest mit der Ablenkeinheit 5 verbunden ist.

Aus optischer Sicht betrachtet hat die Anordnung der Fokussierungslinse 6 im Strahlengang hinter der Ablenkeinheit 5 die Wirkung, dass alle vorherigen Bauteile im Strahlengang mit einem nahezu gleichgroßen Strahlquerschnitt des Laserstrahls 2 beaufschlagt und folglich einer, im Verhältnis zur Anordnung der Fokussierungslinse 6 an früherer Stelle im Strahlenverlauf, geringeren thermischen Belastung unterliegen. Die Umlenkspiegel 4 sollen im dargestellten Ausführungsbeispiel jeweils um eine Achse drehbar sein, womit sich der Bewegungsbereich des Laserstrahls 2 über das Werkstück vergrößern lässt.

Die Vorrichtung kann aber auch keinen, weniger oder mehr Umlenkspiegel 4 umfassen, die lediglich zur Einkopplung des vom deformierbaren Spiegel 3 reflektierten Laserstrahls 2 in die Ablenkeinheit 5 dienen. Der sich aus optischer Sicht ergebende Vorteil einer erfindungsgemäßen Vorrichtung kommt hier allerdings kaum zur Wirkung, da außer dem Ablenkspiegel 5.1 der Ablenkeinheit 5 kein weiteres optisches Bauteil folgt, welches vor zu starker thermischer Belastung zu schützen wäre.

Mechanisch betrachtet hat die Anordnung der Fokussierungslinse 6 als letztes optisches Bauteil den Vorteil, dass an dieser bzw. an deren Fassung eine Düse 8 angesetzt werden kann, die den Strahlengang nach der Fokussierungslinse 6 einhüllt.

Vorteilhaft kann z. B. beim Schweißen über die Düse 8 zur Unterstützung der Laserbearbeitung ein Schutzgas zum Bearbeitungsort geführt werden. Oder es können z. B. beim Schneiden entstehende Gase abgesaugt werden. In jedem Fall kann das letzte Bauteil, hier die Fokussierungslinse 6, vor Verschmutzung weitestgehend geschützt werden, die durch die Werkstückbearbeitung verursacht wird.

Eine erfindungsgemäße Vorrichtung vereinbart somit die Vorteile von herkömmlichen Vorrichtungen, bei denen der Laserstrahl über eine Ablenkeinheit bewegt wird, mit den Vorteilen eines mit einem Roboterarm geführten Laserkopfes mit Düse. Herkömmliche Vorrichtungen mit Ablenkeinheiten ermöglichen eine sehr hohe Bearbeitungsgeschwindigkeit innerhalb eines begrenzten Arbeitsbereiches, jedoch ist eine Zuführung von Schutzgas bzw. ein Absaugen von bei der Bearbeitung entstehenden Gasen nicht mit einfachen Mitteln möglich.

Vorrichtungen mit einem über einen Roboterarm geführten Laserkopf sind zwar für größere Arbeitsbereiche einsetzbar und eine am Laserkopf montierbare Düse bietet die genannten Vorteile, jedoch ist die Bearbeitungsgeschwindigkeit durch die Trägheit des Roboterarms begrenzt.

Grundsätzlich kann der deformierbare Spiegel 3 anstelle eines jeden der Umlenkspiegel 4 angeordnet sein, was jedoch zum Nachteil hat, dass dessen Masse, die größer ist als die eines einfachen Umlenkspiegels 4, der ein dünner Planspiegel sein kann, mitbewegt werden muss.

Die Ablenkeinheit 5 umfasst nur einen Ablenkspiegel 5.1, der um zwei Achsen kippbar ist.

In einer ersten Ausführung soll der Ablenkspiegel 5.1 bzw. die Fassung, in der der Ablenkspiegel 5.1 gefasst ist, in einer kardanischen Aufhängung mit zwei Schwenkachsen gelagert sein. Die beiden Schwenkachsen sind mit getrennt ansteuerbaren Antrieben verbunden.

In einer zweiten Ausführung ist der Ablenkspiegel 5.1 über drei an seinem Umfang, bzw. dem Umfang einer Fassung, in dem der Ablenkspiegel 5.1 gefasst ist, vorgesehene Gelenke mit jeweils einem separat ansteuerbaren Linearantrieb verbunden.

Vorteilhaft lässt sich die Vorrichtung als ein Roboter ausführen mit einem fest stehenden Roboterfuß, an dem ein Mehrgelenk-Roboterarm befestigt ist und an dessen freiem Ende die Ablenkeinheit mit der Fokussierungslinse 6 und einer, mit dieser fest verbundenen Düse 8 angeordnet ist.

### Bezugszeichenliste

- 1: Laserstrahlquelle
- 2: Laserstrahl
- 3: deformierbarer Spiegel
- 4: Umlenkspiegel
- 5: Ablenkeinheit
- 5.1: Ablenkspiegel
- 6: Fokussierungslinse
- 7: Verbindungsglied
- 8: Düse

## Patentansprüche

1. Vorrichtung zur Werkstückbearbeitung mittels ablenkbarem Laserstrahl, umfassend eine Laserstrahlquelle (1) zum Aussenden eines Laserstrahls (2), eine ansteuerbare Ablenkeinheit (5), die dazu ausgelegt ist, den auftreffenden Laserstrahl (2) in x-y-Richtung abzulenken, eine Fokussierungslinse (6) und einen ansteuerbaren, deformierbaren Spiegel (3) zur Fokuslagenkorrektur, **dadurch gekennzeichnet,**
**dass** die Fokussierungslinse (6) der Ablenkeinheit (5) in Laserstrahlrichtung nachgeordnet ist und die Ablenkeinheit (5) einen Ablenkspiegel (5.1) aufweist, der über ein starres Verbindungsglied (7) mit der Fokussierungslinse (6) fest verbunden ist.

2. Vorrichtung nach Anspruch 1, **dadurch gekennzeichnet,**
**dass** eine Düse (8) in Laserstrahlrichtung hinter der Fokussierungslinse (6) und zu dieser fest angeordnet vorhanden ist.

3. Vorrichtung nach Anspruch 1, **dadurch gekennzeichnet,**
**dass** der Ablenkspiegel (5.1) in einer kardanischen Aufhängung gelagert ist und mit zwei rotatorischen Antrieben in Verbindung steht.

4. Vorrichtung nach Anspruch 1, **dadurch gekennzeichnet,**
**dass** der Ablenkspiegel (5.1) über eine Dreipunktlagerung mit drei Linearantrieben in Verbindung steht.

5. Vorrichtung nach Anspruch 1, **dadurch gekennzeichnet,**
**dass** zwischen dem deformierbaren Spiegel (3) und dem Ablenkspiegel (5.1) mindestens ein Umlenkspiegel (4) vorhanden ist, der um eine Achse kippbar ist.

6. Vorrichtung nach Anspruch 5, **dadurch gekennzeichnet,**
**dass** die Laserstrahlquelle (1) und der deformierbare Spiegel (3) zueinander starr angeordnet in oder an einem Roboterfuß untergebracht sind, an dem ein Mehrgelenk-Roboterarm angebracht ist, in dem der Laserstrahl (2) über die in den Gelenken angeordneten Umlenkspiegel (4) geführt wird und sich die Ablenkeinheit (5) am freien Ende des Mehrgelenk-Roboterarmes befindet.
